# EUROPEAN PATENT SPECIFICATION

(11) **EP 4 100 313 B1**
(45) Date of publication and mention of the grant of the patent: **20.11.2024**
(21) Application number: 20709408.7
(22) Date of filing: 04.02.2020
(51) Int. Cl.: B63B 35/44, C02F 9/00, E21B 43/20, F03D 13/25, C02F 1/20, C02F 1/44, C02F 103/08

(54) **WIND POWERED OFFSHORE WATER PRODUCTION FACILITY AND METHOD FOR MANUFACTURING SUCH A FACILITY**
WINDBETRIEBENE OFFSHORE-WASSERPRODUKTIONSANLAGE UND VERFAHREN ZUR HERSTELLUNG EINER SOLCHEN ANLAGE
INSTALLATION DE PRODUCTION D'EAU EN MER ALIMENTÉE PAR LE VENT ET PROCÉDÉ DE FABRICATION D'UNE TELLE INSTALLATION

(43) Date of publication of application: 14.12.2022
(73) Proprietor: Single Buoy Moorings Inc, 1723 Marly (CH)
(72) Inventor: FEATHERSTONE, Neil, 98000 Principauté de Monaco (MC); RAATZ, Kevin, 98000 Principauté de Monaco (MC); MARTIN, Bruce, 98000 Principauté de Monaco (MC)
(74) Representative: Nederlandsch Octrooibureau
(86) International application number: PCT/US2020/016493
(87) International publication number: WO 2021/158210

(56) References cited:
- EP-A1- 2 789 848
- WO-A1-2009/040442
- CN-U- 204 674 788
- KR-A- 20120 038 062
- US-A1- 2010 230 366
- US-B1- 7 392 848

## Description

### Technical Field

The present invention relates to an offshore water production facility.

Also, the invention relates to a method for manufacturing such an offshore water production facility.

### Background art

Enhanced Oil Recovery (EOR) is a principle where oil is extracted from a reservoir or well by additional (mechanical) means. EOR increases the amount of oil that can be recovered from a field. EOR can be achieved by means of water injection. EOR comes into play during the latter stages of the field. Therefore, a water injection package is frequently added to a surface vessel after the vessel has been on station for a while. The surface vessel should have space available to locate this package, and should have (weight) capacity available. This may not always be the case. Alternatively, if there are accommodations for weight and space, the surface vessel is not operated at maximum payload capacity for a large part of its life.

It is an objective of the present application to overcome or mitigate these disadvantages. WO2009/040442A1 discloses an offshore wind turbine and subsea well water injection system.

### Summary

The objective is achieved by an offshore water production facility to be located on a body of water comprising a floating object, at least one wind turbine, a power generator that is coupled to the wind turbine and a water production system,
- the floating object comprising a plurality of buoyancy assemblies that support at least one column on which a wind turbine is mounted;
- on the at least one column further a process equipment deck being mounted below an operating area of the wind turbine and above a water surface level;
- the water production system being arranged on the process equipment deck,
wherein the water production system is configured for subsea well water-injection and comprises an ultra-filtration unit and a membrane de-aeration unit for water to be injected.

The invention provides an offshore water production facility that due to the fact that ultra-filtration and membrane de-aeration requires much less space, is lighter and consumes less power than prior art systems that use larger sized filtration towers (or filtration beds) and de-aeration units.

The invention provides enhanced oil recovery through inserting quality water into the hydrocarbon reservoir, in which the quality water is produced by renewable energy. Also, the offshore water production facility can be operated independently of oil or gas production facilities such as FPSO. The offshore water production facility can be located close to a water injection well at a substantial distance from the surface facility. This also reduces the costs for the water injection riser. Furthermore, the offshore water production facility is relocatable and can be positioned above a hydrocarbon reservoir on demand. The oil or gas production facilities do not require to reserve deck space for the water production system.

Additionally, the invention relates to a method for manufacturing an offshore water production facility, that comprises:
- creating a floating object comprising a plurality of buoyancy assemblies that support at least one column for mounting thereon a wind turbine and a power generator that is coupled to the wind turbine;
- creating on the at least one column a process equipment deck below an operating area of the wind turbine and above a water surface level;
- arranging a water production system on the process equipment deck,
wherein the water production system is configured for subsea well water-injection and comprises an ultra-filtration unit and a membrane de-aeration unit.

Moreover according to an embodiment, the method provides that the process equipment deck, the at least one wind turbine and the water production system are installed on the floating object at a quay side location of a floating object production facility. Advantageously, this embodiment allows installation of equipment with relatively low difficulty as the environmental conditions, wind and waves, are much more reduced at quayside than on site.

Advantageous embodiments are further defined by the dependent claims.

### Brief description of drawings

The invention will be explained in more detail below with reference to drawings in which illustrative embodiments thereof are shown. The drawings are intended exclusively for illustrative purposes and not as a restriction of the inventive concept. The scope of the invention is only limited by the definitions presented in the appended claims.

In the drawings elements with the same reference number refer to same or corresponding elements.
Figure 1 shows schematically an offshore site above a hydrocarbon reservoir including a wind powered offshore water treatment system according to an embodiment;
Figure 2 schematically shows a layout of a water production system according to an embodiment;
Figure 3 shows a side view of a floating object according to an embodiment;
Figure 4 shows a top view layout of a process equipment deck in accordance with an embodiment;
Figure 5 schematically shows a power supply diagram for a water production system outside of the scope of the invention.

### Detailed description of embodiments

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

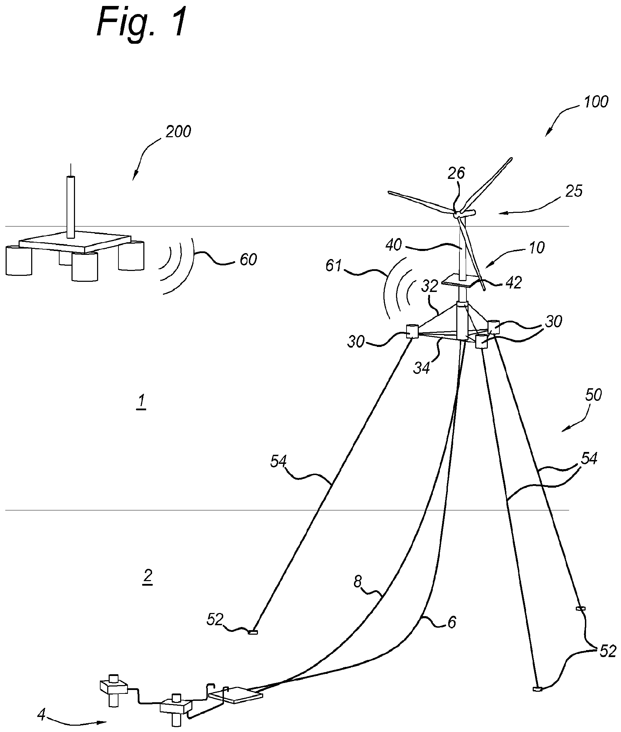

Figure 1 shows schematically an offshore site 2 above a hydrocarbon reservoir including a wind powered offshore water production system 100 according to an embodiment.

At the offshore site a production vessel 200 such as a floating production and offloading facility FPO(or a floating production storage and offloading facility, FPSO) for hydrocarbons or an FPU i.e., a semi-submersible or a TLP (Tension Leg Platform), is located at sea 1 above a subsea hydrocarbon reservoir. The production vessel 200 may be any type of hydrocarbon production facility that is moored at the location. Any type of mooring system (not shown) such as spread mooring or turret mooring can be used to moor the production vessel. The production vessel is coupled by risers (not shown) to one or more production wells on the seabed from which hydrocarbons are collected. Over time, during the exploitation of the hydrocarbon reservoir the pressure of the wells will decrease which will complicate the hydrocarbons production. To enhance the hydrocarbons production water is injected into the hydrocarbons reservoir at an injection location 4 on the seabed. The injection location is typically at a substantial distance from the hydrocarbon well(s) and the location of the production vessel 200.

According to an embodiment, the water injection is provided by an offshore water production facility 100 that is embodied by a floating object that is equipped with a water production system 10 and a power supply to operate the water production system. The power supply is based on a renewable energy source such a wind turbine driven power generator 25, 26.

According to such an embodiment, the floating object comprises a plurality of buoyancy assemblies 30 that support at least one column 40 on which a wind turbine 26 and power generator 25 are mounted.

As shown in Figure 1, the floating object consists of a truss-structure with a number of buoyancy assemblies 30 that support a central column 40 with at least one radial connecting element 32 to each buoyancy assembly. The buoyancy assemblies are interconnected by transverse connecting elements 34.

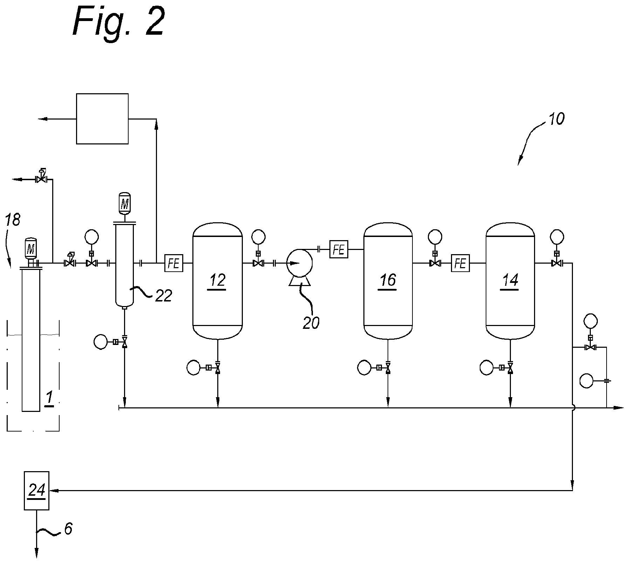

The water production system 10 of which an embodiment will be described with reference to Figure 2, is arranged to take in seawater and after treatment of the seawater, to transport water to the subsea injection point(s) 4 through a water injection riser 6. Also, an umbilical 8 may be running between the floating object and the subsea injection point(s) 4 for transporting electric power and/or control signals.

The floating object is positioned in the vicinity of, or at the location of, the subsea injection point(s) 4 by a mooring system 50. In the seabed anchor points 52 are provided that are connected to the floating object by means of (taut) mooring lines or tendons 54.

To provide remote control from the floating production vessel 200 to the offshore water production facility a communication system 60, 61, preferably a wireless communication system, is provided on the floating production vessel and the offshore water production facility.

Figure 2 schematically shows a layout of a water production system 10 according to an embodiment.

The water production system 10 comprises an ultra-filtration unit 12, a membrane de-aeration unit 14, a sulfate recovery unit 16, a water lift pump 18, a water feed pump 20, and a water injection pump 24.

The water lift pump 18 is arranged to take in seawater. An outlet of the water lift pump 18 is connected to an input of the ultra-filtration unit 12 via an inlet (coarse) filter 22. The ultra-filtration unit 12 is arranged to produce high quality treated (fresh) water from the sea water received from the water lift pump 18.

An outlet of the ultra-filtration unit 12 is connected to an inlet of the water feed pump 20. An outlet of the water feed pump 20 is connected to an inlet of the sulfate recovery unit 16 which is arranged to remove sulfate ions from the water.

An outlet of the sulfate recovery unit 16 is connected to an inlet of the membrane de-aeration unit 14 which is arranged to remove dissolved gases from the water. An outlet of the membrane de-aeration unit 14 is finally arranged for coupling to a subsea well water-injection system (including a high pressure water pump 24).

In some embodiments, the water production system 10 comprises a feed system (not shown) for feeding chemical additives to the water. Such chemical additives may be used to reduce detrimental reactions of produced water within the reservoir after injection.

The water production system 10 is powered by the wind turbine based power generator 25, 26 located on the column 40 of the floating object.

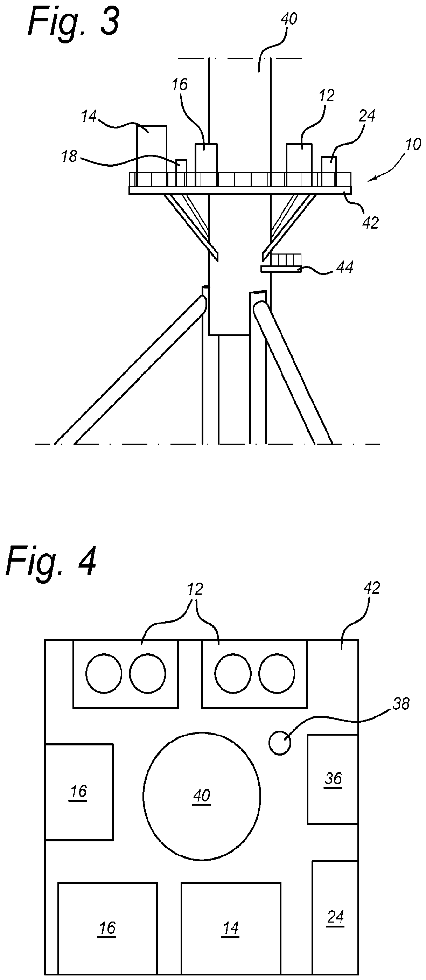

Figure 3 shows a side view of a floating object according to an embodiment.

According to an embodiment, the water production system 10 is installed on a process equipment deck 42. The process equipment deck 42 is mounted on the column 40 that carries the wind turbine 25 (including the power generator 26). The process equipment deck 42 is located between the operational area of the turbine (i.e. the area covered by the diameter of the rotor) and the level of the sea surface.

According to a further embodiment, an additional boat landing deck 44 is installed on the column 40 between the process equipment deck 42 and the sea surface level. The boat landing deck 44 is used for mooring service vessels that may deliver chemicals and other materials for use with the water production system 10.

In an embodiment the boat landing deck 44 has an area that is substantially smaller than the area of the process equipment deck 42.

Figure 4 shows a top view layout of a process equipment deck 42 in accordance with an embodiment.

On the process equipment deck 42 components of the water production system 10 are mounted in a manner that the point of gravity (in horizontal directions) does not significantly change with respect to a column supporting only a wind turbine based power generator.

In the embodiment shown, the water production system 10 comprises as components a pair of ultra-filtration units 12, a pair of membrane de-aeration units 14 and a pair of sulfate recovery units 16. Also, the water injection pump 24 that feeds the produced water to the subsea water injection points 4 is shown in the layout.

An area of the process equipment deck 42 is reserved as lay-down area 36 for goods delivered by a service vessel. A crane 38 is positioned adjacent to the lay-down area 36 for moving the goods across the deck.

Optionally, a second crane can be provided on the process equipment deck outside of the lay-down area.

The layout of the water production system components on the process equipment deck 42 may be such that the lay-down area 36 is positioned in a sector of the process equipment deck 42 above and overlapping the boat landing deck 44. The components of the water production system 10 may be arranged in a manner that high-risk equipment and the storage of chemicals is not in the lay-down area 36 of the process equipment deck that overlaps with the area of the boat landing deck 44 below it.

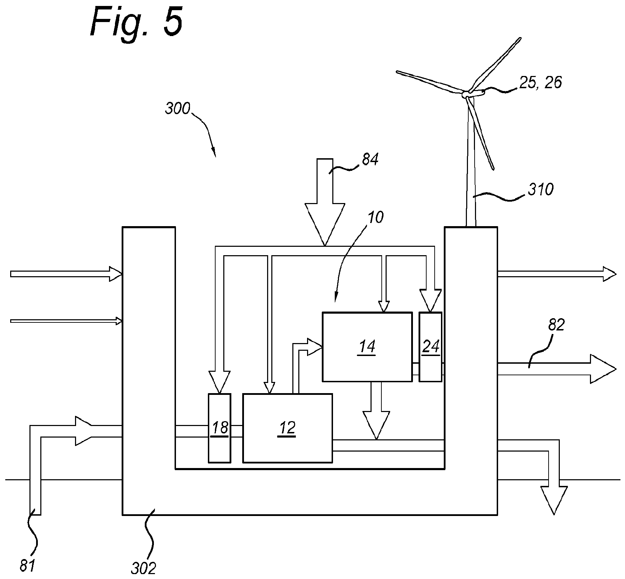

Figure 5 schematically shows a diagram for a water production system 10 outside of the scope of the invention.

The water production system 10 and the wind-turbine based power generator 25, 26 are arranged on or in a floating object 300.

The water production system 10 processes a flow 81 of incoming sea water into a flow 82 of high quality water that is to be injected by a water injection pump 24 in a subsea hydrocarbon reservoir. The power generator 25 supplies power 84 to the components 12, 14, 18, 24 of the water production system 10. In this embodiment, optionally, a sulfate recovery 16 may be installed as well.

The floating object 300 can be embodied as a floating tower structure supported by a truss-structure of buoyancy assemblies as described above with reference to Figures 1, 3 and 4. Alternatively, the floating object 300 may be embodied as a semi-submersible structure 302 which carries at least one column 310 on which a wind turbine 26 and power generator 25 are mounted. The submersible structure 302 may be arranged to carry two or more columns that each support a wind turbine and power generator.

According to an embodiment, the offshore water production facility is manufactured according to a method which comprises:
- creating a floating object comprising a plurality of buoyancy assemblies that support at least one column for mounting thereon a wind turbine and a power generator that is coupled to the wind turbine;
- creating on the at least one column a process equipment deck below an operating area of the wind turbine and above a water surface level;
- arranging a water production system on the process equipment deck,
wherein the water production system is configured for subsea well water-injection and comprises an ultra-filtration unit and a membrane de-aeration unit.

Preferably, the at least one wind turbine 26, the power generator 25 and the water production system 10 are installed on the floating object at a quayside location of a floating object production facility. Installing the wind turbine and power generator and the components of the water production system at the quayside location reduces the costs and effort significantly as working conditions at quayside are typically better than at an offshore location.

The invention has been described with reference to some embodiments. Obvious modifications and alterations will occur to the person skilled in the art upon reading and understanding the preceding detailed description. It is intended that the invention be construed as including all such modifications and alterations insofar as they come within the scope of the appended claims.

## Claims

1. An offshore water production facility to be located on a body of water and comprising a floating object, at least one wind turbine, a power generator that is coupled to the wind turbine and a water production system,
- the floating object comprising a plurality of buoyancy assemblies that support at least one column on which a wind turbine is mounted;
- on the at least one column further a process equipment deck being mounted below an operating area of the wind turbine and above a water surface level;
- the water production system being arranged on the process equipment deck, wherein the water production system is configured for subsea well water-injection and comprises an ultra-filtration unit and a membrane de-aeration unit for water to be injected.

2. The offshore water production facility according to claim 1, wherein a boat landing deck is mounted on the at least one column between the process equipment deck and the water surface level.

3. The offshore water production facility according to claim 1 or claim 2, wherein the water production system is powered by the power generator.

4. The offshore water production facility according to any one of the preceding claims, wherein the water production system further comprises a water lift pump, wherein: the water lift pump is arranged to take in water from the body of water, an outlet of the water lift pump is connected to an input of the ultra-filtration unit via an inlet filter, an outlet of the ultra-filtration unit is connected to an inlet of the membrane de-aeration unit, and an outlet of the membrane de-aeration unit is arranged for coupling to a subsea well water-injection system.

5. The offshore water production facility according to claim 4, wherein the water production system additionally comprises a sulfate recovery unit (SRU) for removal of sulfate from water and the sulfate recovery unit is arranged between the outlet of the ultra-filtration unit and the inlet of the membrane de-aeration unit, in which an inlet of the sulfate recovery unit is coupled to the outlet of the ultra-filtration unit and an outlet of the sulfate recovery unit is coupled to the inlet of membrane de-aeration unit.

6. The offshore water production facility according to claim 4, wherein the water production system further comprises a water feed pump which is arranged between the outlet of the ultra-filtration unit and the inlet of the membrane de-aeration unit; the water feed pump being powered by the power generator.

7. The offshore water production facility according to claim 5, wherein the water production system further comprises a water feed pump which is arranged between the outlet of the ultra-filtration unit and the inlet of the sulfate recovery unit; the water feed pump being powered by the power generator.

8. The offshore water production facility according to any one of the preceding claims, wherein the process equipment additionally comprises a lay-down area for transportable goods, and adjacent to the lay-down area, a crane for moving the goods over the process equipment deck.

9. The offshore water production facility according to claim 8 when dependent on claim 2, wherein the lay-down area is positioned in a sector of the process equipment deck above and overlapping the area of the boat landing deck.

10. The offshore water production facility according to claim 9, further comprising a second crane on the process equipment deck outside the sector.

11. The offshore water production facility according to any one of the preceding claims, wherein the column is a tower with at least one radial connecting element to each buoyancy assembly and the buoyancy assemblies are interconnected by transverse connecting elements, and wherein the wind turbine and power generator are mounted on top of the tower.

12. The offshore water production facility according to any one of the preceding claims, wherein the buoyancy assemblies are adapted to be connected to a corresponding anchor point on a seabed by means of a tendon or a taut mooring line.

13. A method for manufacturing an offshore water production facility, comprising:
- creating a floating object comprising at least one column and a plurality of buoyancy assemblies that support the at least one column;
- mounting on the at least one column a wind turbine and a power generator that is coupled to the wind turbine;
- creating on the at least one column a process equipment deck below an operating area of the wind turbine and above a water surface level;
- arranging a water production system on the process equipment deck,
wherein the water production system is configured for subsea well water-injection and comprises an ultra-filtration unit and a membrane de-aeration unit.

14. The method according to claim 13, further comprising: configuring the power generator for supplying power to the water production system.

15. The method according to claim 13 or claim 14, wherein the method comprises that the process equipment deck, the at least one wind turbine and power generator, and the water production system are installed on the floating object at a quayside location of a floating object production facility.

## Patentansprüche

1. Offshore-Wassergewinnungsanlage, die auf einem Gewässer angeordnet werden soll und ein schwimmendes Objekt, mindestens eine Windturbine, einen mit der Windturbine gekoppelten Stromgenerator und ein Wassergewinnungssystem umfasst,
- wobei das schwimmende Objekt eine Vielzahl von Auftriebskörpern umfasst, die mindestens eine Säule tragen, auf der eine Windturbine montiert ist;
- auf der mindestens einen Säule ferner ein Prozessausrüstungsdeck unterhalb eines Betriebsbereichs der Windturbine und oberhalb eines Wasseroberflächenniveaus angebracht ist;
- wobei das Wassergewinnungssystem auf dem Prozessausrüstungsdeck angeordnet ist,
wobei das Wassergewinnungssystem für eine Unterwasserbohrloch-Wasserinjektion konfiguriert ist und eine Ultrafiltrationseinheit und eine Membranentlüftungseinheit für das zu injizierende Wasser umfasst.

2. Offshore-Wassergewinnungsanlage nach Anspruch 1, wobei auf der mindestens einen Säule zwischen dem Prozessausrüstungsdeck und dem Wasseroberflächenniveau ein Bootsanlegerdeck angebracht ist.

3. Offshore-Wassergewinnungsanlage nach Anspruch 1 oder Anspruch 2, wobei das Wassergewinnungssystem durch den Stromgenerator angetrieben wird.

4. Offshore-Wassergewinnungsanlage nach einem der vorangehenden Ansprüche, wobei das Wassergewinnungssystem ferner eine Wasserhebepumpe umfasst, wobei: die Wasserhebepumpe so angeordnet ist, dass sie Wasser aus dem Gewässer ansaugt, ein Auslass der Wasserhebepumpe über einen Einlassfilter mit einem Eingang der Ultrafiltrationseinheit verbunden ist, ein Auslass der Ultrafiltrationseinheit mit einem Einlass der Membranentlüftungseinheit verbunden ist und ein Auslass der Membranentlüftungseinheit so angeordnet ist, dass er an ein Unterwasserbohrloch-Wasserinjektionssystem angeschlossen werden kann.

5. Offshore-Wassergewinnungsanlage nach Anspruch 4, wobei das Wassergewinnungssystem zusätzlich eine Sulfatrückgewinnungseinheit (SRU) zur Entfernung von Sulfat aus Wasser umfasst und die Sulfatrückgewinnungseinheit zwischen dem Auslass der Ultrafiltrationseinheit und dem Einlass der Membranentlüftungseinheit angeordnet ist, wobei ein Einlass der Sulfatrückgewinnungseinheit mit dem Auslass der Ultrafiltrationseinheit und ein Auslass der Sulfatrückgewinnungseinheit mit dem Einlass der Membranentlüftungseinheit verbunden ist.

6. Offshore-Wassergewinnungsanlage nach Anspruch 4, wobei das Wassergewinnungssystem ferner eine Wasserförderpumpe umfasst, die zwischen dem Auslass der Ultrafiltrationseinheit und dem Einlass der Membranentlüftungseinheit angeordnet ist, wobei die Wasserförderpumpe durch den Stromgenerator angetrieben wird.

7. Offshore-Wassergewinnungsanlage nach Anspruch 5, wobei das Wassergewinnungssystem ferner eine Wasserförderpumpe umfasst, die zwischen dem Auslass der Ultrafiltrationseinheit und dem Einlass der Sulfatrückgewinnungseinheit angeordnet ist, wobei die Wasserförderpumpe durch den Stromgenerator angetrieben wird.

8. Offshore-Wassergewinnungsanlage nach einem der vorhergehenden Ansprüche, wobei die Prozessausrüstung zusätzlich einen Ablagebereich für transportierbare Güter und neben dem Ablagebereich einen Kran zum Bewegen der Güter über das Prozessausrüstungsdeck umfasst.

9. Offshore-Wassergewinnungsanlage nach Anspruch 8, wenn sie von Anspruch 2 abhängt, wobei der Ablagebereich in einem Sektor des Prozessausrüstungsdecks oberhalb des Bereichs des Bootsanlegerdecks angeordnet ist und diesen überlappt.

10. Offshore-Wassergewinnungsanlage nach Anspruch 9, ferner umfassend einen zweiten Kran auf dem Prozessausrüstungsdeck außerhalb des Sektors.

11. Offshore-Wassergewinnungsanlage nach einem der vorhergehenden Ansprüche, wobei die Säule ein Turm mit mindestens einem radialen Verbindungselement zu jedem Auftriebskörper ist und die Auftriebskörper durch quer verlaufende Verbindungselemente miteinander verbunden sind, und wobei die Windturbine und der Stromgenerator oben auf dem Turm montiert sind.

12. Offshore-Wassergewinnungsanlage nach einem der vorhergehenden Ansprüche, wobei die Auftriebskörper angepasst sind, mit einem entsprechenden Ankerpunkt auf dem Meeresboden mittels eines Spannglieds oder einer gespannten Verankerungsleine verbunden zu werden.

13. Verfahren zur Herstellung einer Offshore-Wassergewinnungsanlage, umfassend:
- Erzeugen eines schwimmenden Objekts, das mindestens eine Säule und eine Vielzahl von Auftriebskörpern umfasst, die die mindestens eine Säule tragen;
- Anbringen einer Windturbine und eines mit der Windturbine gekoppelten Stromgenerators an der mindestens einen Säule;
- Erzeugen eines Prozessausrüstungsdecks auf der mindestens einen Säule unterhalb eines Betriebsbereichs der Windturbine und oberhalb eines Wasseroberflächenniveaus;
- Anordnen eines Wassergewinnungssystems auf dem Prozessausrüstungsdeck, wobei das Wassergewinnungssystem für eine Unterwasserbohrloch-Wasserinjektion konfiguriert ist und eine Ultrafiltrationseinheit und eine Membranentlüftungseinheit umfasst.

14. Verfahren nach Anspruch 13, ferner umfassend: Konfigurieren des Stromgenerators zur Versorgung des Wassergewinnungssystems mit Strom.

15. Verfahren nach Anspruch 13 oder Anspruch 14, wobei das Verfahren umfasst, dass das Prozessausrüstungsdeck, die mindestens eine Windturbine und der Stromgenerator sowie das Wassergewinnungssystem auf dem schwimmenden Objekt an einem Standort am Kai einer Produktionsanlage für schwimmende Objekte installiert werden.

## Revendications

1. Installation de production d'eau en mer destinée à être située sur un corps d'eau et comprenant un objet flottant, au moins une éolienne, un générateur d'énergie qui est couplé à l'éolienne et un système de production d'eau,
- l'objet flottant comprenant une pluralité d'ensembles de flottaison qui supportent au moins une colonne sur laquelle une éolienne est montée ;
- sur la au moins une colonne, un pont d'équipement de traitement étant monté au-dessous d'une zone de fonctionnement de l'éolienne et au-dessus d'un niveau de surface de l'eau ;
- le système de production d'eau étant agencé sur le pont d'équipement de traitement, dans laquelle le système de production d'eau est configuré pour une injection d'eau de puits sous-marin et comprend une unité d'ultrafiltration et une unité de désaération de membrane pour l'eau à injecter.

2. Installation de production d'eau en mer selon la revendication 1, dans laquelle un pont d'embarcadère est monté sur la au moins une colonne entre le pont d'équipement de traitement et le niveau de la surface de l'eau.

3. Installation de production d'eau en mer selon la revendication 1 ou la revendication 2, dans laquelle le système de production d'eau est alimenté par le générateur d'énergie.

4. Installation de production d'eau en mer selon l'une quelconque des revendications précédentes, dans laquelle le système de production d'eau comprend en outre une pompe de levage d'eau, dans laquelle : la pompe de levage d'eau est agencée pour aspirer de l'eau à partir du corps d'eau, une sortie de la pompe de levage d'eau est connectée à une entrée de l'unité d'ultrafiltration via un filtre d'entrée, une sortie de l'unité d'ultrafiltration est connectée à une entrée de l'unité de désaération de membrane, et une sortie de l'unité de désaération de membrane est agencée pour être couplée à un système d'injection d'eau de puits sous-marin.

5. Installation de production d'eau en mer selon la revendication 4, dans laquelle le système de production d'eau comprend en outre une unité de récupération de sulfate (SRU) pour éliminer le sulfate à partir de l'eau et l'unité de récupération de sulfate est agencée entre la sortie de l'unité d'ultrafiltration et l'entrée de l'unité de désaération de membrane, dans laquelle une entrée de l'unité de récupération de sulfate est couplée à la sortie de l'unité d'ultrafiltration et une sortie de l'unité de récupération de sulfate est couplée à l'entrée de l'unité de désaération de membrane.

6. Installation de production d'eau en mer selon la revendication 4, dans laquelle le système de production d'eau comprend en outre une pompe d'alimentation en eau qui est agencée entre la sortie de l'unité d'ultrafiltration et l'entrée de l'unité de désaération de membrane ; la pompe d'alimentation en eau étant alimentée par le générateur d'énergie.

7. Installation de production d'eau en mer selon la revendication 5, dans laquelle le système de production d'eau comprend en outre une pompe d'alimentation en eau qui est agencée entre la sortie de l'unité d'ultrafiltration et l'entrée de l'unité de récupération de sulfate ; la pompe d'alimentation en eau étant alimentée par le générateur d'énergie.

8. Installation de production d'eau en mer selon l'une quelconque des revendications précédentes, dans laquelle l'équipement de traitement comprend en outre une zone de dépose pour des marchandises transportables, et adjacente à la zone de dépose, une grue pour déplacer les marchandises au-dessus du pont d'équipement de traitement.

9. Installation de production d'eau en mer selon la revendication 8 lorsqu'elle dépend de la revendication 2, dans laquelle la zone de dépose est positionnée dans un secteur du pont d'équipement de traitement au-dessus de et chevauchant la zone du pont d'embarcadère.

10. Installation de production d'eau en mer selon la revendication 9, comprenant en outre une seconde grue sur le pont d'équipement de traitement à l'extérieur du secteur.

11. Installation de production d'eau en mer selon l'une quelconque des revendications précédentes, dans laquelle la colonne est une tour avec au moins un élément de connexion radial à chaque ensemble de flottaison et les ensembles de flottaison sont interconnectés par des éléments de connexion transversaux, et dans laquelle l'éolienne et le générateur d'énergie sont montés sur le dessus de la tour.

12. Installation de production d'eau en mer selon l'une quelconque des revendications précédentes, dans laquelle les ensembles de flottabilité sont adaptés pour être connectés à un point d'ancrage correspondant sur un fond marin au moyen d'un câble ou d'une ligne d'amarrage tendue.

13. Procédé de fabrication d'une installation de production d'eau en mer, comprenant les étapes consistant à :
- créer un objet flottant comprenant au moins une colonne et une pluralité d'ensembles de flottaison qui supportent la au moins une colonne ;
- monter sur la au moins une colonne une éolienne et un générateur d'énergie qui est couplé à l'éolienne ;
- créer sur la au moins une colonne un pont d'équipement de traitement en dessous d'une zone de fonctionnement de l'éolienne et au-dessus d'un niveau de surface de l'eau ;
- disposer un système de production d'eau sur le pont d'équipement de traitement, dans lequel le système de production d'eau est configuré pour une injection d'eau de puits sous-marin et comprend une unité d'ultrafiltration et une unité de désaération de membrane.

14. Procédé selon la revendication 13, comprenant en outre l'étape consistant à : configurer le générateur d'énergie pour fournir de l'énergie au système de production d'eau.

15. Procédé selon la revendication 13 ou la revendication 14, dans lequel le procédé comprend le pont d'équipement de traitement, la au moins une éolienne et le générateur d'énergie, et le système de production d'eau étant installés sur l'objet flottant à un emplacement à quai d'une installation de production d'objet flottant.
